Europäisches Patentamt

European Patent Office

Office européen des brevets

(11) Veröffentlichungsnummer: **0 198 222**
**A2**

(12) **EUROPÄISCHE PATENTANMELDUNG**

(21) Anmeldenummer: **86103350.4**

(22) Anmeldetag: **12.03.86**

(51) Int. Cl.⁴: **H02J 3/14**

(30) Priorität: **12.03.85 DE 3508695**

(43) Veröffentlichungstag der Anmeldung:
**22.10.86 Patentblatt 86/43**

(84) Benannte Vertragsstaaten:
**AT BE CH DE FR GB IT LI LU NL SE**

(71) Anmelder: **Micro Logic Gesellschaft für rechnergesteuerte Systeme mbH Halfinger Strasse 47 D-8000 München 82(DE)**

(72) Erfinder: **von Gall, Ferenc c/o Micro Logic Gesellschaft für Rechnergesteuerte Syst. GmbH Halfinger Strasse 47 D-8000 München 82(DE)**

(74) Vertreter: **WILHELMS, KILIAN & PARTNER Patentanwälte Eduard-Schmid-Strasse 2 D-8000 München 90(DE)**

(54) **Lastverteilungsverfahren.**

㊦ Ein Lastverteilungsverfahren zum Zwecke der Einhaltung einer maximalen Last mit zusätzlichem Energiespareffekt weist mindestens eine Verteilungsebene und zugehörige Untersysteme zum Schalten der angeschlossen Verbraucher und eine mindestens nach den folgenden zwei Kriterien ablaufende Schaltsystematik auf:

-erstens nach dem über die vom zuständigen E-Werk bekanntgegebene Integrationszeit ermittelten gleitenden Gesamtverbrauchsdurchschnitt, wobei dessen Ermittlung durch laufende Speicherung der gemessenen Gesamtverbrauchswerte und laufende Aufsummierung der Werte der gerade endenden Integrationsperiode oder gezielte Integration in der vom E-Werk signalisierten Integrationsperiode erfolgt, und

-zweitens nach der gleitend durch Integral ermittelten zuteilbaren Arbeit (Leistung • Zeit), die aus der Maximallast abzüglich der jeweiligen gespeicherten Verbrauchswerte und der zukünftig nicht abschaltbaren Lasten, inklusive Hintergrundlast, für eine beliebige, im Entscheidungsfall jedoch mindestens bis zum Ende der minimalen Einschaltzeit des geprüften anzuschaltenden Geräts dauernde Integralperiode ermittelt wird und besagt, wieviel Energie überhaupt auf alle Verbraucher verteilt werden kann, wobei die Hintergrundlast rechnerisch oder durch kurzzeitiges Abschalten einer oder mehrerer Lasten ermittelt werden kann.

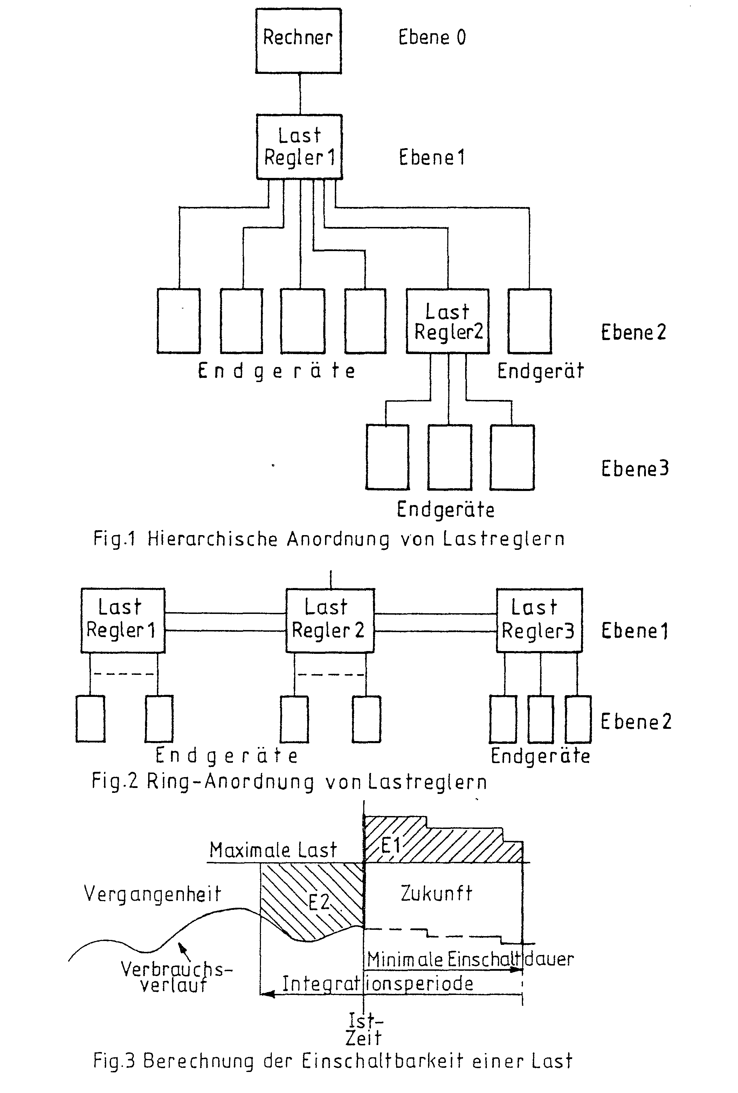

Fig.1 Hierarchische Anordnung von Lastreglern

# LASTVERTEILUNGSVERFAHREN

Die Erfindung betrifft ein durch mehrere einander überlagerte Kriterien steuerbares vorausschauendes Verfahren zur Lastverteilung mit beliebig viel flexibel steuerbaren Verteilungsebenen.

Die hohe Trägheit der Kraftwerke zwingt die E-Werke, bei der Preisgestaltung eine Bereitstellungsgebühr und eine verbrauchsabhängige Gebühr zu berechnen, wobei die Bereitstellungsgebühr nach dem maximal ermittelten Verbrauchswert in einer Meßperiode berechnet wird, da diese maximale Leistung bei der Kraftwerkskapazität bereitgestellt werden muß, um die entsprechende Leistung in einem nicht vorhersehbaren Augenblick auch liefern zu können. Es gilt, diese Bereitstellungsgebühr und damit die nötige E-Werkskapazität sowie die Stromrechnungen des Systemanwenders zu reduzieren.

Stand der Technik

Bekannt sind für die Leistungsbegrenzung seit Längerem Maximumwächter wie z.B. in der DE 2605803 A von Heliowatt dargelegt.

Weiterhin bekannt sind rechnergesteuerte Schaltgeräte, Belastungsregler und Lastbedarfssteuerungen wie in den DE 2806426 A, DE 3027675 A und DE 3116564 A dargelegt, die jedoch nur die Zielsetzung haben, die Summe aller angeschlossenen Lasten unterhalb eines Maximalwertes zu halten, und bei drohender Überschreitung mit einem zyklischen Abwerfverfahren Lasten abzuschalten. Ein in diesen Schriften beschriebenes Verfahren hat den Nachteil, daß die einzelnen Verbraucher untereinander nicht oder nur in grober weise abgestuft werden können und deshalb wichtige Verbraucher u.U. gerade dann abgeschaltet werden, wenn sie am meisten benötigt werden.

Ein weiterer Nachteil der oben erwähnten Verfahren ist, daß bei Lasten sehr unterschiedlicher Größe und Schaltsystematik die unflexible Abschaltmimik nicht genügend Freiheitsgrade aufweist, um allen Anforderungen gerecht zu werden und die großen, oft sogar auch kleinere Verbraucher zu lange unberücksichtigt läßt.

Hier bietet zwar die DE 3027675 A eine Teillösung -für die Einschaltung von großen Lasten vorher alle kleineren abzuschalten, damit die große Last genügend Lastraum erhält -nimmt damit jedoch die Abschaltung aller anderen Lasten für mehr als die Einschaltperiode der großen Last in Kauf. Dies ist jedoch untragbar zum Beispiel in einer Küche, wo dann während der Heizlüfter läuft, die Suppe kalt wird.

Überdies kann die zur Verfügung stehende Leistung nicht voll genutzt werden, weil für die gesamte Einschaltzeit der großen Last die Nichtüberschreitung der Leistungsgrenze nicht sicher vorhergesagt werden kann und somit entweder die Leistungsgrenze überschritten wird oder die Lasten ohne Einhaltung von minimalen Einschaltzeiten abgeworfen werden müssen oder die große Last überhaupt nicht eingeschaltet werden kann.

Dieses Problem wird durch das Lastverteilungsverfahren gemäß Anspruch 1 gelöst. Das vorliegende Verfahren berücksichtigt nicht nur die gleitende Durchschnittsmessung über die vom E-Werk bekanntgegebene Periode, sondern beinhaltet auch ein besonderes Vorausschauverfahren, mit dessen Hilfe aus den jeweiligen Maximalverbrauchswerten die ermittelten nicht beeinflußbaren sogenannten Hintergrundlasten abgezogen werden und in den so ermittelten Restlastraum die zur Berechnungszeit eingeschalteten Verbraucher für die jeweilige minimale Einschaltzeit eingetragen werden. Bei Anforderung einer großen Last wird in diese Eintragungen rechnerisch die große Last miteingetragen und berechnet, ob durch die Zuschaltung in einer zukünftigen Zeitperiode die integrale Maximallast überschritten wird. Hierzu wird aus der vergangenen Periode die nicht verbrauchte Energiemenge ausagerechnet, die in der kommenden jeweiligen restlichen Integrationszeit noch über dem Maximalwert verbraucht werden kann. Erst wenn diese Berechnung die Nichtüberschreitung anzeigt, wird die Last tatsächlich eingeschaltet. Dieses Verfahren ist wesentlich flexibler als die alten, da es bei hoher Anforderung die Maximallast hundertprozentig ausnutzen kann.

Ein weiterer Vorteil des erfindungsgemäßen Verfahrens ist die Möglichkeit, durch Ermittlung von Verbrauchsgewohnheiten und durch die Begrenzung des Verbrauchs einzelner Verbraucher auf ein vorberechnetes oder der Gewohnheit entsprechendes Maß zu verhindern, daß Verbraucher in Zeiten, in denen dies nicht vorgesehen ist, länger eingeschaltet werden. Hierbei sollte auf die Beschaffenheit der unterschiedlichen Verbraucher Rücksicht genommen und erlaubt werden, daß auch in nicht vorgesehenen Zeiten Verbraucher eingeschaltet werden können (z.B. in Notfällen), das System jedoch solche Verbraucher, die mehr Strom verbrauchen als gewöhnlich, schnell abregelt und erst dann dauerhaft eingeschaltet läßt, wenn dieses Einschaltbedürfnis aus der Einschaltsystematik hervorgeht.

Dadurch, daß anstatt eines periodischen Ein-/Ausschaltens auch eine durch Phasenanschnitt gesteuerte Leistungsreduzierung zu erreichen ist, können in den Kreis der in die Steuerung einbezogenen Geräte auch Beleuchtung und ähnliche Kontinuität erfordernde Einrichtungen einbezogen werden. Dies ermöglicht eine wesentlich präzisere Steuerung und eine zusätzliche Stromersparnis.

Ein Vorteil der Ausgestaltung des erfindungsgemäßen Verfahrens gegenüber den bekannten Verfahren ist die beliebige Abstufbarkeit der unterschiedlichen Verbraucher in der Priorität und in der zeitlichen Nutzung. Diese Flexibilität ist wesentlich, um einerseits den ständigen Änderungen in der Verbraucherstruktur Rechnung zu tragen, andererseits durch die Vorgabe von Verbrauchskurven für jede Last Strom einzusparen, der durch Vergeßlichkeit oder Nachlässigkeit sonst verbraucht würde.

Die Organisation des Systems schließlich in beliebig vielen ähnlich gestalteten Ebenen mit bidirektionaler Kommunikation zwischen den Ebenen bietet die nötige Flexibilität, um das System allen örtlichen Gegebenheiten anzupassen und außerdem in zentrale Leitsysteme einzubetten.

Die an sich bekannte Struktur weist in dem vorliegenden erfindungsgemäßen Verfahren die Besonderheit auf, daß alle Ebenen wie Bausteine mit definierten Eingangs-und Ausgangseigenschaften versehen sind, die eine beliebige Aneinanderreihung zulassen, ohne dadurch die Hauptrechenaufgabe in die Zentrale zu verlegen. Die Intelligenz des Systems kann bis in die Schaltelemente der einzelnen Verbraucher verteilt werden, wodurch der Komplexität des Systems keine Grenzen gesetzt sind.

Ein wesentlicher Vorteil des neuen Verfahrens ist die völlige Parametrierung aller Zuschaltkriterien. Dies ermöglicht eine Anpassung an unterschiedlichste Anwendungsfälle. Deshalb wurde das System so entworfen, daß, wenn erforderlich, für jeden Anwender oder jede Ebene, sogar für jedes angeschlossene Gerät eine eigene Systematik einprogrammiert werden kann, ohne hierdurch das gesamte Funktionsgefüge durcheinander zu bringen. Funktionssystematisch sind die den einzelnen Geräten oder Ebenen zugeordneten Funktionen Bausteine mit definierten Ein-und Ausgabeeigenschaften.

So kann eine Last durch eine Unterebene mit ähnlichen Verteileigenschaften wie die jeweils darüberliegende ersetzt werden, und eine höhere Ebene durch einen Leitrechner, Handeingabevorrichtung oder Programmierungseinrichtung.

Die Kommunikation zwischen den Ebenen kann je nach Beschaffenheit der Geräte, des Umfeldes und der sonstigen Bedingungen durch V24-, RS232-, Parallel-Bus-, oder Stromschleifenübertraung, über Infrarot-, Ultraschall-, Funk-, Hochfrequenz-, Telefon-, oder sonstigen Strecken erfolgen.

Genauso können die Lastschaltenden Elemente Schütze, Relais, Thyristoren und Transistoren, aber genausogut auch Phasenanschnittsteuerungen oder Phasenauslaßsteuerungen sein.

Die Kurzzeitschaltsystematik, als steuerndes Kriterium kann ein beliebiges Regelverhalten sein, wie Zweipunkt-, Dreipunkt,-PI-, PID-oder reiner P-Regler, kann aber genausogut ein periodisches oder aperiodisches Verhalten zeigen.

Zur Flexibilität des Systems gehört auch, daß Dringlichkeitssignale zwischen den Geräten gesendet werden können, die die Parametrierung kurzzeitig verändern. Hierüber können auch Statusmeldungen angefordert und gesendet werden. Die einzelnen Kriterien können auch mit unlinearen Funktionen überlappen. Durch die Gebrauchshäufigkeitskurvenerfassung wird außerdem das System lernfähig, undzwar in jeder Ebene steuerbar unterschiedlich.

Auf der beigefügten Zeichnung zeigt
Fig. 1 ein hierarchisch geordnetes Lastverteilsystem mit Leitrechner und 2 Vorteilungsebenen
Fig. 2 ein im Ringmodus geschaltetes System
Fig. 3 die Berechnung der Einschaltbarkeit einer Last

Bei dem auf Fig. 1 abgebildeten hierarchisch geordneten Lastverteilsystem bildet ein Lasregler-(verteiler)gerät 1 eine Ebene 1 und ein Lastregelgerät 2 eine Ebene 2. Alle Befehle des Rechners an Gerät 2 beeinflussen auch die Funktion des Gerätes 1. Gerät 1 handhabt Gerät 2 so als wäre es eine große Last mit kontinuierlich steuerbarem Verbrauch und gibt entsprechende Signale weiter. Genauso kann der Rechner dem Gerät 1 die jeweils maximal zu schaltende Energie angeben. In dieser Energie ist Gerät 2 mitenthalten.

Werden die Geräte wie in Fig. 2 in Ringmodus geschaltet, dann arbeiten sie zusammen, um gemeinsam die maximal schaltbare Energie auszunutzen. In diesem Fall bilden sie gemeinsam die Ebene 1 und die Endgeräte alle die Ebene 2

In Fig. 3 wird die Systematik des Einschaltens einer (großen) Last verdeutlicht. Zur jeweiligen Ist-Zeit der Überlegung, ob eine Last einschaltbar ist oder nicht, wird die einzuschaltende Last hypothetisch zugeschaltet für die minimale vorgeschriebene Einschaltdauer, die für jede Last vordefinierbar ist. Wenn daraus sich eine E1 Energiemenge ergibt, die über der Maximallast liegt, dann wird vom Ende der minimalen Einschaltzeit die Integrationsperiode rückgerechnet und die E2 nicht verbrauchte Energiemenge in dieser Periode bestimmt. Ist E2 größer als E1, dann kann die Last zugeschaltet werden.

Für die Berechnung der E1 Energiemenge ist notwendig, daß alle zukünftig eingeschalteten Lasten für deren minimalen Einschaltdauer in eine Verbrauchstabelle eingetragen werden. Deshalb wird diese Tabelle auf jeder Ebene geführt und beim Einschalten und Ausschalten einer Last korrigiert.

Aus dieser Tabelle können dann die unabwendbar zugeteilten Lasten und eine vorberechnete durchschnittliche Hintergrundlast ausgelesen und für die Berechnung der E1 Energiemenge herangezogen werden.

Für die Schwankungen der Hintergrundlast kann ein Sicherheitsbetrag definiert werden, der außer die Schwankungsbreite auch die Häufigkeit von Zuschaltvorgängen berücksichtigt und vom jeweiligen Gerät selbst ermittelt werden kann. Die übrigen Zuschaltvorgänge sind außer den bereits behandelten Kriterien nach einer zur jeder Entscheidung gesondert ermittelten Prioritätsreihenfolge der einzelnen wartenden und eingeschalteten Geräte ermittelt, die bei wartenden Geräten eine parametrierbar steigende und bei eingeschalteten Geräten ebenfalls parametrierbar fallende interne Priorität berechnet. Wie die übrigen Zusammenhänge, können die steigenden und fallenden Tendenzen auch beliebig, auch unlinear und von bestimmten anderen Ereignissen abhängig sein.

Die interne Prioritätsreihenfolge besagt die Reihenfolge der Entscheidungsfindung bei Zuschaltüberlegungen einer Ebene.

Bei der Aufstellung der internen Prioritätenreihenfolge werden alle einander überlappten Kriterien mathematisch berücksichtigt. Hierzu gehört auch die Relativierung der Entscheidungen, inwieweit nur lokale, der jeweiligen Ebene direkt zugeornete Lasten, oder die Konstellation des Gesamtsystems in die Prioritätsfrage einbezogen werden sollen.

## Ansprüche

1) Lastenverteilungsverfahren zum Zwecke der Einhaltung einer maximalen Last mit zusätzlichem Energiespareffekt **gekennzeichnet durch** mindestens eine Verteilungsebene und zugehörige Untersysteme zum Schalten der angeschlossenen Verbraucher, und eine mindestens nach den folgenden zwei Kriterien ablaufenden Schaltsystematik:

-erstens nach dem über die vom zuständigen E-Werk bekanntgegebene Integrationszeit ermittelten gleitenden Gesamtverbrauchsdurchschnitt, wobei dessen Ermittlung durch laufende Speicherung der gemessenen Gesamtverbrauchswerte und laufende Aufsummierung der Werte der gerade endenden Integrationsperiode oder gezielte Integration in der vom E-Werk signalisierten Integrationsperiode erfolgt

-und zweitens nach der gleitend durch Integral ermittelten zuteilbaren Arbeit (Leistung * Zeit), die aus der Maximallast abzüglich der jeweiligen gespeicherten Verbrauchswerte und der zukünftig nicht abschaltbaren Lasten, inclusive Hintergrundlast, für eine beliebige, im Entscheidungsfall jedoch mindestens bis zum Ende der minimalen Einschaltzeit des geprüften anzuschaltenden Gerätes dauernde Integralperiode ermittelt wird und besagt, wieviel Energie überhaupt auf alle Verbraucher verteilt werden kann, wobei die Hintergrundlast rechnerisch oder durch kurzzeitiges Abschalten einer oder mehreren Lasten ermittelt werden kann.

2) Verfahren nach Anspruch 1, **dadurch gekennzeichnet, daß** die Lastverteilung außer nach den bereits erwähnten Kriterien noch nach mindestens einem der folgenden weiteren Kriterien abläuft, wie:

-der Kurzzeitschaltsystematik der angeschlossenen Geräte oder eine der weiteren Ebenen, wobei die Kurzzeitschaltsystematik eine generelle Zeitablaufangabe ist, die besagt, ob ein Verbraucher oder eine der weiteren Ebenen kontinuierliche oder periodische Energie benötigt und die die nötigen Parameter zur Beschreibung der Periodizität enthält und bei der Zuteilung dementsprechend berücksichtigt wird,

-der zugewiesenen Priorität, die besagt, welche Wichtigkeit dem jeweiligen Verbraucher oder weiteren Ebenen zukommt und dadurch bewirkt, daß die Energiezuteilung in der Rangfolge der Priorität oder proportional zum zugewiesenen Prioritätsparameter erfolgt,

- der Gebrauchshäufigkeitskurve, die eine voreingestellte oder vom System selbst ermittelte Verlaufskurve oder eine Kombination der beiden ist, die besagt, wieviel Energie der jeweilige Verbraucher oder eine weitere Ebene durchschnittlich in der vorzugsweise als Sekunde, Minute oder Stunde definierten Zeiteinheit in einer als Tag, Woche oder sonstig definierten Zeitperiode verbraucht hat oder verbrauchen darf,

-dem durch Meldungen von unten nach oben signalisierten Bedarf einzelner Verbraucher,

-dem jeweiligen Gesamtverbrauch einer Ebene, die relativ zu der dieser Ebene zugewiesenen maximalen Leistung gewertet wird,

wobei diese und eventuell weitere Kriterien durch die Festlegung von Gewichtungsparametern beliebiger Ordnung und Wertigkeit, Unwirksamkeit eingeschlos sen, vorzugsweise durch lineare Zusammenhänge untereinander in ihrer Auswirkung abgestuft werden, wobei alle Parameter fest einprogrammiert oder über die Führungsschnittstelle von einem höheren System oder einer höheren Ebene aus auf dem Wege der Kommunikation bis hin zur untersten Ebene übertragen werden können, aus den so ermittelten Gesamtprioritäten die Ein-und Ausschaltsignale abgeleitet werden, wobei für die Zuschaltung eines Gerätes genügend zuteilbare Arbeit vorhanden sein muß, unabhängig von der ermittelten Gesamtpriorität.

3) Verfahren nach Anspruch 1 oder 2,**dadurch gekennzeichnet, daß** das System beliebig viele hierarchisch oder in Ring organisierte Ebenen aufweist und auf dem Wege der Kommunikation zwischen den Ebenen die zum Ablauf der Lastverteilung der jeweiligen Ebenen erforderlichen Parameter untereinander austauscht, wobei jedoch jede Verteilungsebene selbsttätig die ihr zugewiesene jeweilige maximale Energie aufgrund der jeweils gültigen Prioritäten und Parameter auf Lasten oder weitere Ebenen verteilt und hierüber Statusmeldungen zurücksenden kann.

Rechner — Ebene 0

Last Regler 1 — Ebene 1

Last Regler 2 — Ebene 2

Endgeräte — Endgerät

Ebene 2

Endgeräte — Ebene 3

Fig.1 Hierarchische Anordnung von Lastreglern

Last Regler 1 — Last Regler 2 — Last Regler 3 — Ebene 1

Endgeräte — Endgeräte — Ebene 2

Fig.2 Ring-Anordnung von Lastreglern

Maximale Last

E1

Vergangenheit — E2 — Zukunft

Verbrauchs-verlauf

Minimale Einschaltdauer

Integrationsperiode

Ist-Zeit

Fig.3 Berechnung der Einschaltbarkeit einer Last